# EUROPEAN PATENT SPECIFICATION

(11) **EP 3 369 687 B1**
(45) Date of publication and mention of the grant of the patent: **17.07.2024**
(21) Application number: 15907188.5
(22) Date of filing: 26.10.2015
(51) Int. Cl.: B66B 11/08, F16D 55/06, F16D 65/092, B66B 5/02

(54) **ELEVATOR DEVICE**
AUFZUGSVORRICHTUNG
DISPOSITIF D'ASCENSEUR

(43) Date of publication of application: 05.09.2018
(73) Proprietor: Hitachi, Ltd., Tokyo 100-8280 (JP)
(72) Inventor: ABE Takashi, Tokyo 100-8280 (JP); NAKAYAMA Masato, Tokyo 100-8280 (JP); SATOU Gorou, Tokyo 100-8280 (JP)
(74) Representative: Mewburn Ellis LLP
(86) International application number: PCT/JP2015/080057
(87) International publication number: WO 2017/072824

(56) References cited:
- WO-A1-2015/068183
- JP-A- 2009 274 834
- JP-A- 2011 126 679
- JP-A- 2012 188 176
- JP-A- 2013 112 431
- JP-A- H09 104 572
- JP-U- H0 326 842
- JP-U- S55 132 074
- JP-U- S56 138 234
- JP-U- S6 237 635
- US-A1- 2008 296 098

## Description

### Technical Field

The present invention relates to an elevator device, and in particular to an elevator device suitable for an elevator device with a disc brake system.

### Background Art

An elevator device with a disc brake system is disclosed in PTL 1. PTL 1 discloses a brake system for an elevator device, including a disc rotating with a rotor of a device, a plurality of pads each facing the disc, and a pressing mechanism for pressing the pads against the surface of the disc. In addition, disc brake systems for automobiles are disclosed in PTL 2, PTL 3, and PTL 4. In these patent literatures, a plurality of grooves are formed on a brake pad.

WO 2015/068183 A1 shows the preamble of claim 1 and discloses a brake device with which a member subject to braking can be held. US 2008/296098 A1 discloses an arrangement to prevent cracking of a brake shoe.

### Citation List

### Patent Literatures

PTL 1: JP 2012-225513 A
PTL 2: JP 2007-24286 A
PTL 3: JP 2014-70651 A
PTL 4: JP 2015-10635 A

### Summary of Invention

### Technical Problem

PTL 1, however, only discloses a brake system for an elevator device having the configuration as described above, and PTLs 2 to 4 discloses disc brake systems for automobiles.

Typically, since the total mass of a car, a balance weight, and a rope to be stopped by a disc brake system is large in an elevator device as compared to an automobile, and since the velocity is also high particularly in a high-speed elevator, the amount of braking energy is very large, frictional heat generated during braking thus makes the temperature at frictional faces of the disc and the brake pad very high, and the time taken until stopping after braking is several seconds to several tens of seconds.

Furthermore, in a disc brake system for an elevator device, gas is likely to be generated from resin used for part of the material of a brake pad owing to the rise in the high temperature, and wear is likely to occur, which leads to such a phenomenon as generation of much wear debris. Since such gas and wear debris present between the frictional faces make frictional characteristics less stable, gas and wear debris generated during braking need to be removed so as to be present between the frictional faces as little as possible in order to stabilize the frictional characteristics.

The present invention has been made in view of the aforementioned circumstances, and an object thereof is to provide an elevator device including a disc brake system capable of quickly removing gas and wear debris generated from the vicinity of the center of a brake pad without lowering the strength of the brake pad, which provides stable frictional characteristics.

### Solution to Problem

According to the present invention there is provided an elevator device as specified in claim 1. The elevator device may optionally be as specified in any one of claims 2 to 10.

### Advantageous Effects of Invention

The present invention achieves an elevator device including a disc brake system capable of quickly removing gas and wear debris generated from the vicinity of the center of a brake pad without lowering the strength of the brake pad, which provides stable frictional characteristics.

### Brief Description of Drawings

[FIG. 1] FIG. 1 is a schematic configuration diagram illustrating a first embodiment of an elevator device according to the present invention.
[FIG. 2] FIG. 2 is an enlarged view of a hoisting machine included in the first embodiment of the elevator device according to the present invention.
[FIG. 3] FIG. 3 is a side view of the hoisting machine illustrated in FIG. 2.
[FIG. 4] FIG. 4 is an enlarged plan view of a disc brake system included in the hoisting machine illustrated in FIG. 3.
[FIG. 5] FIG. 5 is an enlarged view of a main part of the disc brake system illustrated in FIG. 4.
[FIG. 6] FIG. 6 is an enlarged front view of a brake pad of the disc brake system illustrated in FIG. 4.
[FIG. 7] FIG. 7 is a side view of the brake pad illustrated in FIG. 6.
[FIG. 8] FIG. 8 is an enlarged front view of another example of a brake pad as a second embodiment of an elevator device according to the present invention.
[FIG. 9] FIG. 9 is an enlarged view of a hoisting machine included in a third embodiment of an elevator device according to the present invention.

### Description of Embodiments

An elevator device according to the present invention will be described below with reference to illustrated embodiments. In the figures, the same reference numerals are used for corresponding components.

### First Embodiment

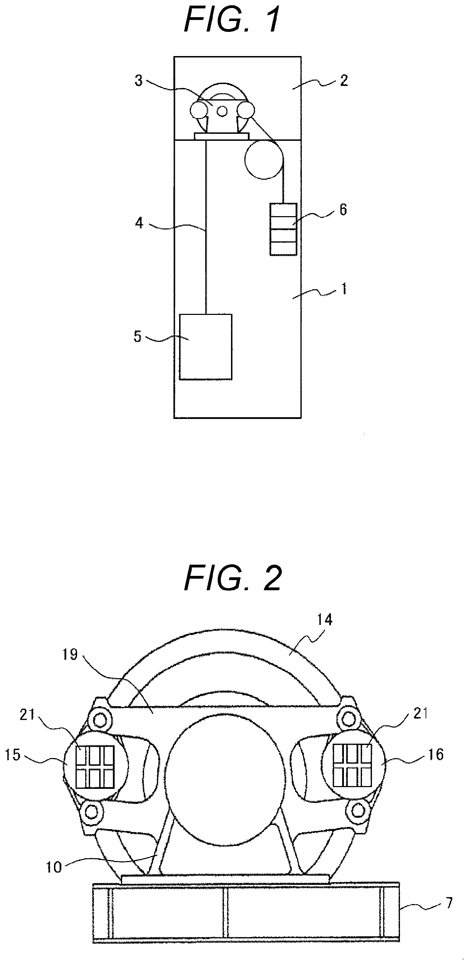

FIG. 1 illustrates an overall configuration of a first embodiment of an elevator device of the present invention.

As illustrated in FIG. 1, a hoisting machine 3 is installed in a machine room 2 formed on a top of a hoistway 1, and a main rope (rope) 4 is wound around a sheave of the hoisting machine 3. One end of the main rope 4 is connected to a car 5, and the other end of the main rope 4 is connected with a balance weight 6.

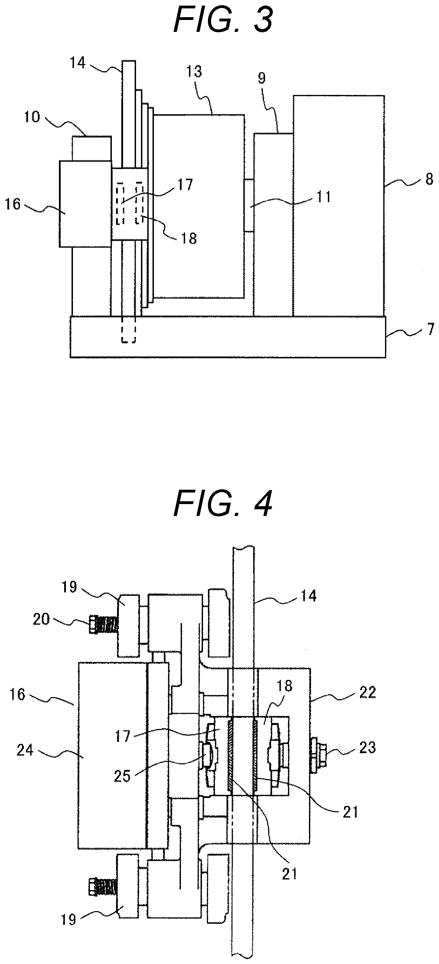

A detailed configuration of the hoisting machine 3 is illustrated in FIGS. 2 and 3.

As illustrated in FIGS. 2 and 3, the hoisting machine 3 is installed on a fixed base 7 fixed to a floor of the machine room 2, and a drive motor 8 and bearing stands 9 and 10 are fixed to the fixed base 7. The bearing stands 9 and 10 rotatably supports a rotating shaft 11 that transmits driving force of the drive motor 8 to the hoisting machine 3. A sheave 13 and a brake disc 14 having a diameter larger than that of the sheave 13 are coaxially fixed to the rotating shaft 11 that drives the hoisting machine 3.

In addition, disc brake systems 15 and 16 are attached to the bearing stand 10 at two positions, lateral to each other, of a support arm 19. The disc brake systems 15 and 16 are mounted on a horizontal line through the center of the brake disc 14.

The disc brake systems 15 and 16 have the same configuration, and each include an actuator including an electromagnetic coil and a spring, which are not illustrated. In addition, the disc brake systems 15 and 16 are configured such that, after the drive motor 8 is powered off, the disc brake systems 15 and 16 become a non-excited state and press brake shoes 17 and 18 called calipers against respective faces of the brake disc 14 with elastic force of the springs to generate braking force on the brake disc 14.

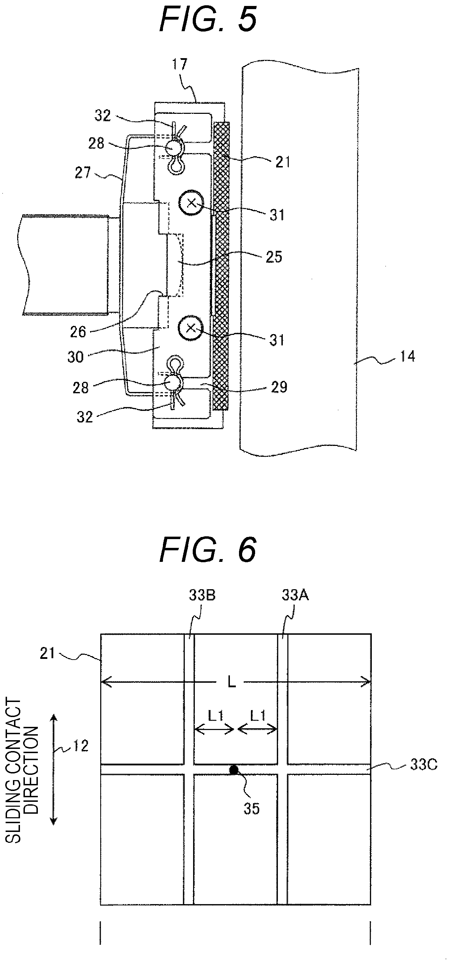

A detailed configuration of the disc brake system 16 is illustrated in FIGS. 4 and 5.

The disc brake system 16 is attached, with a plurality of bolts 20 or the like, to the support arm 19 of the bearing stand 10 fixed to the fixed base 7. The disc brake system 16 has a cylindrical outer shape, while the brake shoes 17 and 18 have rectangular outer shapes as will be described later.

The brake shoes 17 and 18 each have a brake pad 21, the brake pads 21 facing braking contact faces on respective sides of the brake disc 14. The brake shoe 18 is fixed to a brake body 22 by tightening of a stroke adjusting bolt 23 for adjusting an operating distance in braking. In contrast, the brake shoe 17 is movable in a braking direction (a lateral direction in FIG. 4) coming into contact with the brake disc 14 by an actuator 24 including an electromagnetic coil and a spring, which are not illustrated.

Since the brake shoes 17 and 18 have substantially the same structures, the brake shoe 17 attached to a driving rod 25 of the actuator 24 will be described herein.

As illustrated in FIG. 5, an end portion of the driving rod 25 of the actuator 24 is turnably connected to an engagement portion (having a recessed shape) 26 of the brake shoe 17. A spring member 27 for attachment is attached to an outer circumference of the end portion of the driving rod 25, and bent portions at ends of the spring member 27 for attachment are engaged with pins 28 attached to the brake shoe 17. A plate 30 having cutouts 29 engaged with the pins 28 is positioned on a side face of the brake shoe 17, and is fixed to the brake shoe 17 with set screws 31. Retaining split pins 32 are inserted in the pins 28 to hold the connection of the brake shoe 17, the spring member 27 for attachment, and the plate 30. As described above, the brake shoe 17 side is turnably (swingably) held by the end portion of the driving rod 25.

The attachment structure of the brake shoe 18 attached to and end of the stroke adjusting bolt 23 illustrated in FIG. 4 is substantially the same as that of the brake shoe 17.

In braking, the brake shoe 17 is pressed toward the brake disc 14 by the spring, which is not illustrated, included in the actuator 24 illustrated in FIG. 4 via the driving rod 25. As a result, the pair of brake shoes 17 and 18 located on the respective sides of the brake disc 14 press the respective brake pads 21 to the brake disc 14 to apply braking force, stop the hoisting machine 3 illustrated in FIG. 1, and bring the car 5 and the balance weight 6 into a stopped state.

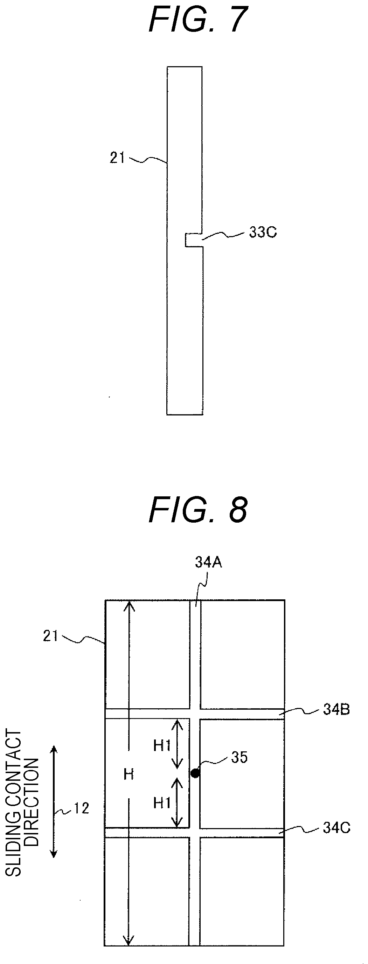

FIGS. 6 and 7 illustrate enlarged views of the brake pad 21 of the brake shoe 17.

Since the brake shoe 17 and the brake shoe 18 have the same configuration, the brake pad 21 of the brake shoe 17 will be described herein. FIGS. 6 and 7 illustrate a sliding contact face of the brake pad 21 in sliding contact with the brake disc 14, in which an arrow 12 indicates a sliding contact direction (a tangent direction of the circumference) of the brake pad 21 and the brake disc 14.

As illustrated in FIG. 6, the brake pad 21 has a quadrangular shape, having a first linear groove 33A and a second linear groove 33B formed substantially along the sliding contact direction with respect to the brake disc 14 (the vertical direction or gravity direction in the present embodiment), and a third linear groove 33C formed in a direction substantially perpendicular to the sliding contact direction 12.

In addition, in the present embodiment, the center of the brake pad 21 is represented by a reference numeral 35, and the first linear groove 33A and the second linear groove 33B are formed in parallel to each other avoiding the center 35 of the brake pad 21 with a distance therebetween, which will be described in detail below, on opposite sides of the center 35 of the brake pad 21, while the third linear groove 33C is formed at a position substantially through the center 35 of the brake pad 21.

These linear grooves 33A, 33B, and 33C intersect with each other at positions off the center 35 of the brake pad 21, and the grooves communicate with each other at the intersections. In other words, a groove structure in which the linear grooves 33A, 33B, and 33C intersect with each other at the center 35 of the brake pad 21 is avoided.

When the width dimension of the brake pad 21 is represented by L and the distance from the center 35 of the brake pad 21 to the first linear groove 33A or the second linear groove 33B is represented by L1, the first linear groove 33A and second linear groove 33B are formed to meet a condition of 0.1L ≤ L1 ≤ 0.25L.

As described above, since a total mass of the car 5, the balance weight 6, and the main rope 4 to be stopped by the disc brake systems 15 and 16 is significantly large in an elevator device, and since the velocity is also high particularly in a high-speed elevator device, the amount of braking energy is very large. Thus, the temperature at sliding contact faces of the brake disc 14 and the brake pad 21 becomes very high by frictional heat generated during braking. In addition, the time taken until stopping after braking is several seconds to several tens of seconds, gas is generated from resin used for part of the material of the brake pad 21 owing to the rise in the temperature, and wear debris is generated. In particular, in the case of the rectangular brake pad 21, since the vicinity of the center 35 of the brake pad 21 is pressed most hard, gas is generated and wear debris is generated near the center 35 of the brake pad 21.

In the present embodiment, however, since the third linear groove 33C is formed through substantially the center 35 of the brake pad 21, the gas generated near the center 35 of the brake pad 21, in particular, is quickly discharged. In addition, since the third linear groove 33C extends in the direction perpendicular to the sliding contact direction 12 of the brake disc 14 and the brake pad 21, wear debris that is likely to be generated from the third linear groove 33C is quickly discharged through the first linear groove 33A and the second linear groove 33B. Specifically, as illustrated in FIG. 2, in a system in which the disc brake systems 15 and 16 are arranged on a horizontal line through the center of the brake disc 14, since the direction in which the first linear groove 33A and the second linear groove 33B are formed is the vertical direction, that is, the gravity direction, wear debris is quickly discharged downward through the first linear groove 33A and the second linear groove 33B and removed.

Furthermore, since the first linear groove 33A and the second linear groove 33B are formed avoiding the center 35 of the brake pad 21 and communicating with the third linear groove 33C extending through substantially the center 35 of the brake pad 21, wear debris generated from the vicinity of the center 35 of the brake pad 21, in particular, is removed as described above without lowering the strength of the brake pad 21 at the vicinity of the center 35 of the brake pad 21 that is pressed most hard. In particular, the position of the center 35 of the brake pad 21 between the two grooves, that is, the first linear groove 33A and the second linear groove 33B allows the brake pad 21 to have a large contact face near the center 35 of the brake pad 21, which increases the strength. In addition, the third linear groove 33C extending through substantially the center 35 of the brake pad 21 allows gas generated from the large contact face near the center 35 of the brake pad 21 to be quickly discharged.

With the configuration of the present embodiment described above, gas generated from the contact face near the center 35 of the brake pad 21 is discharged and wear debris is removed while the strength is maintained, which provides an elevator device having more stable frictional characteristics of the vicinity of the center 35 of the brake pad 21 with respect to the brake disc 14 and having the disc brake systems 15 and 16 with more stable braking characteristics than a configuration as in the related art in which wear debris is likely to be accumulated.

### Second Embodiment

FIG. 8 illustrates an enlarged view of another example of a brake pad 21 of a brake shoe 17 as a second embodiment of an elevator device according to the present invention.

As illustrated in FIG. 8, the brake pad 21 in the present embodiment has a rectangular shape that is long in the sliding contact direction 12 indicated by an arrow, and has one first linear groove 34A formed through substantially the center 35 of the brake pad 21 and substantially along the sliding contact direction 12 of the brake pad 21 and the brake disc 14, and two grooves, which are a second linear groove 34B and a third linear groove 34C, formed in a direction substantially perpendicular to the sliding contact direction 12 at positions with the center 35 of the brake pad 21 therebetween and avoiding the center 35 of the brake pad 21. These linear grooves 34A, 34B, and 34C communicate with each other at intersections avoiding the center 35 of the brake pad 21.

When the height dimension of the brake pad 21 is represented by H and the distance from the center 35 of the brake pad 21 to the second linear groove 34B or the third linear groove 34C is represented by H1, the second linear groove 34B and the third linear groove 34C are formed to meet a condition of 0.1H≦H1≦0.25H.

With the present embodiment as described above as well, since the first linear groove 34A is formed avoiding intersecting with the second linear groove 34B and the third linear groove 34C at the center 35 of the brake pad 21 and to extend through substantially the center 35 of the brake pad 21, gas generated from the vicinity of the center 35 of the brake pad 21, in particular, is quickly discharged. In addition, wear debris generated from the second linear groove 34B and the third linear groove 34C perpendicular to the sliding contact faces of the brake disc 14 and the brake pad 21 is quickly discharged through the first linear groove 34A. Specifically, as illustrated in FIG. 2, in a system in which the disc brake systems 15 and 16 are arranged on a horizontal line through the center of the brake disc 14, since the direction in which the first linear groove 34A is formed is the vertical direction, that is, the gravity direction, wear debris falls downward through the first linear groove 34A and is quickly removed.

Furthermore, since the number of first linear groove 34A is one and the second linear groove 34B and the third linear groove 34C are formed avoiding the center 35 of the brake pad 21, wear debris generated from the vicinity of the center 35 of the brake pad 21, in particular, falls in the gravity direction and is removed as described above without lowering the strength of the brake pad 21 at the vicinity of the center 35 of the brake pad 21 that is pressed most hard. The formation of the two grooves, that is, the second linear groove 34B and the third linear groove 34C such that the center 35 of the brake pad 21 is positioned between the second linear groove 34B and the third linear groove 34C allows the brake pad 21 to have a large contact face near the center 35, which increases the strength. In addition, the first linear groove 34A extending through substantially the center 35 of the brake pad 21 allows gas generated from the large contact face near the center 35 of the brake pad 21 to be quickly discharged.

With the present embodiment as well, generated gas is discharged and wear debris is removed while the strength is maintained, which provides an elevator device having more stable frictional characteristics of the vicinity of the center 35 of the brake pad 21 with respect to the brake disc 14 and having the disc brake systems 15 and 16 with more stable braking characteristics than a configuration as in the related art in which wear debris is likely to be accumulated.

### Third Embodiment

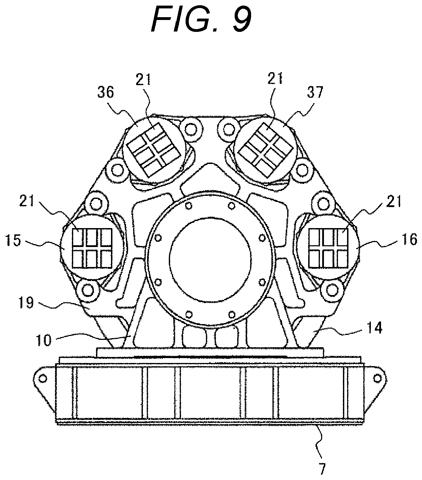

FIG. 9 illustrates an enlarged view of a hoisting machine included in a third embodiment of an elevator device according to the present invention.

In the present embodiment illustrated in FIG. 9, disc brake systems include disc brake systems 15 and 16 arranged on a horizontal line through the center of a brake disc 14, and disc brake systems 36 and 37 mounted above the disc brake systems 15 and 16. Brake pads 21 of all these disc brake systems 15, 16, 36, and 37 have the configuration in the first embodiment illustrated in FIG. 6 described above, that is, the configuration including two grooves, which are a first linear groove 33A and a second linear groove 33B, formed to extend in the sliding contact direction 12 of the brake pad 21 and the brake disc 14, and one third linear groove 33C formed to intersect with the first linear groove 33A and the second linear groove 33B in such a manner as to communicate with the first linear groove 33A and the second linear groove 33B, and extend in a direction perpendicular to the sliding contact direction 12 and through the center 35 of the brake pad 21, in which the intersections of the first linear groove 33A and the second linear groove 33B with the third linear groove 33C are positioned off the center 35 of the brake pad 21.

In addition, the first linear groove 33A and the second linear groove 33B are formed to extend in the vertical direction (gravity direction) in the disc brake systems 15 and 16, while the first linear groove 33C is formed to extend in the sliding contact direction 12 but to be tilted with respect to the vertical direction (gravity direction) in the disc brake systems 36 and 37.

Alternatively, in the present embodiment, the brake pads 21 of all the disc brake systems 15, 16, 36, and 37 may each have the configuration of the first embodiment illustrated in FIG. 8 described above, the is, the configuration having one first linear groove 34A formed to extend in the sliding contact direction 12 of the brake pad 21 and the brake disc 14 and through the center 36 of the brake pad 21, and the second linear groove 34B and the third linear groove 34C formed to intersect with the first linear groove 34A in such a manner to communicate with the first linear groove 34A and extend in the direction perpendicular to the sliding contact direction 12, in which the intersections of the first linear groove 34A with the second linear groove 34B and the third linear groove 34C are positioned off the center 35 of the brake pad 21, the first linear groove 34A is formed to extend in the vertical direction (gravity direction) in the disc brake systems 15 and 16 while the second linear groove 34B and the third linear groove 34C extending in the sliding contact direction 12 are tilted with respect to the vertical direction (gravity direction) in the disc brake systems 36 and 37.

In addition, in the present embodiment, the configurations of the brake pads 21 of the disc brake systems 15 and 16 and the disc brake systems 36 and 37 in the first embodiment and those in the second embodiments may be combined.

For example, the brake pads 21 of the disc brake systems 15 and 16 may have the configuration in the first embodiment (the configuration in FIG. 6) or the configuration in the second embodiment (the configuration in FIG. 8), and the disc brake systems 36 and 37 may have the configuration in the second embodiment or the configuration in the first embodiment, or alternatively, three disc brake systems 15, 16, and 36 may have the configuration in the first embodiment (the configuration in FIG. 6) or the configuration in the second embodiment (the configuration in FIG. 8), and the remaining one disc brake system 37 may have the configuration in the second embodiment or the configuration in the first embodiment.

Specifically, in the present embodiment illustrated in FIG. 9, four disc brake systems 15, 16, 36, and 37 are mounted on the support arm 19 of the bearing stand 10 supported by and fixed to the fixed base 7. Since the disc brake systems 15 and 16 are arranged on a horizontal line through substantially the center 35 of the brake disc 14 similarly to the first embodiment and/or the second embodiment described above, the brake pads 21 having the same configurations as those in the first and second embodiments can be used to produce the same effects as those in the first and second embodiments.

In addition, the brake pads 21 used in the disc brake systems 36 and 37 may have various configurations. For example, the first linear groove 33A, the second linear groove 33B or 34A may be used in vertical direction similarly to the brake pads 21 of the configuration in in the first embodiment (FIG. 6) and the configuration in the second embodiment (FIG. 8) described above, or the first linear groove 33A, the second linear groove 33B, or the first linear groove 34A may be used in a different direction that substantially corresponds to the sliding contact direction 12 at the mounting positions of the disc brake systems 36 and 37.

In the former configuration, the effects similar to those with the disc brake systems 15 and 16 are also produced with the disc brake systems 36 and 37.

In contrast, in the latter configuration, the first linear groove 33A, the second linear groove 33B, or the first linear groove 34A is inclined as compared to that in the disc brake systems 15 and 16. For example, the brake pad 21 of the disc brake system 36 is mounted at a position turned by 45 degrees in the clockwise direction from the brake pad 21 illustrated in FIG. 6. Although the first linear groove 33A and the second linear groove 33B formed in the sliding contact direction 12 is inclined with respect to the gravity direction, however, since the third linear groove 33C communicating with the first linear groove 33A and the second linear groove 33B is also formed to be inclined by 45 degrees with respect to the gravity direction, wear debris is discharged through the third linear groove 33C, and substantially the same effects can be expected to a greater or less extent.

As described above, in a brake pad 21 of a disc brake system in an elevator device according to the present invention, one third linear groove 33C or first linear groove 34A is formed to extend through substantially the center 35 of the brake pad 21, and two other grooves, which are a first linear groove 33A and a second linear groove 33B or a second linear groove 34B and a third linear groove 34C, are formed perpendicularly to the third linear groove 33C or the first linear groove 34A and arranged to face each other with the center 35 of the brake pad 21 therebetween at positions away from the center 35 of the brake pad 21.

With such a configuration, gas and wear debris generated from the vicinity of the center 35 of the brake pad 21 are quickly discharged. Specifically, the linear grooves intersect with and communicate with each other avoiding the center 35 of the brake pad 21, which allows wear debris and gas generated from the vicinity of the center 35 of the brake pad 21, in particular, to be removed without lowering the strength of the brake pad 21 in the vicinity of the center 35 of the brake pad 21 pressed most hard. Thus, an elevator device having stable frictional characteristics of the vicinity of the center 35 of the brake pad 21 with respect to the brake disc 14 and having the disc brake systems with stable braking characteristics is provided.

In the present invention, in addition to the aforementioned configuration, at least one disc brake system 16 is positioned on a horizontal line through substantially the center 35 of the brake disc 14, and the brake pad 21 of the disc brake system 16 has two grooves, which are the first linear groove 33A and the second linear groove 33B, formed to extend in the sliding contact direction 12 of the brake pad 21 and the brake disc 14, and the third linear groove 33C formed to intersect with the first linear groove 33A and the second linear groove 33B in such a manner to communicate with the first linear groove 33A and the second linear groove 33B and extend in the direction substantially perpendicular to the sliding contact direction 12, in which the intersections of the first linear groove 33A and the second linear groove 33B with the third linear groove 33C are positioned off the center 35 of the brake pad 21.

With such a configuration, gas generated from the vicinity of the center 35 of the brake pad 21 is quickly discharged mainly through the third linear groove 33C. In addition, wear debris that is likely to be generated from the third linear groove 33C in the direction perpendicular to the sliding contact direction 12 is quickly discharged through the first linear groove 33A and the second linear groove 33B. Specifically, in a system in which the disc brake systems 15 and 16 are arranged on a horizontal line through the center of the brake disc 14, since the direction in which the first linear groove 33A and the second linear groove 33B are formed is the vertical direction, that is, the gravity direction, wear debris is quickly discharged downward through the first linear groove 33A and the second linear groove 33B and removed.

In the present invention, in addition to the aforementioned configuration, at least one disc brake system 16 is positioned on a horizontal line through substantially the center 35 of the brake disc 14, and the brake pad 21 of the disc brake system 16 has one first linear groove 34A formed to extend in the sliding contact direction 12 of the brake pad 21 and the brake disc 14, and the second linear groove 34B and the third linear groove 34C formed to intersect with the first linear groove 34A in such a manner to communicate with the first linear groove 34A and extend in the direction substantially perpendicular to the sliding contact direction 12, in which the intersections of the first linear groove 34A with the second linear groove 34B and the third linear groove 34C are positioned off the center 35 of the brake pad 21.

With such a configuration, gas generated from the vicinity of the center 35 of the brake pad 21 is quickly discharged mainly through the first linear groove 34A. In addition, wear debris that is likely to be generated from the second linear groove 34B and the third linear groove 34C in the direction perpendicular to the sliding contact direction 12 is quickly discharged through the first linear groove 34A. Specifically, in a system in which the disc brake systems 15 and 16 are arranged on a horizontal line through the center of the brake disc 14, since the direction in which the first linear groove 34A is formed is the vertical direction, that is, the gravity direction, wear debris is quickly discharged downward and removed through the first linear groove 34A.

Thus, the present invention achieves an elevator device including a disc brake system capable of quickly removing gas and wear debris generated from the vicinity of the center of a brake pad without lowering the strength of the brake pad, which provides stable frictional characteristics.

### Reference Signs List

1 hoistway
2 machine room
3 hoisting machine
4 main rope
5 car
6 balance weight
7 fixed base
8 drive motor
9, 10 bearing stand
11 rotating shaft
12 sliding contact direction
13 sheave
14 brake disc
15, 16, 36, 37 disc brake system
17, 18 brake shoe
19 support arm
20 bolt
21 brake pad
22 brake body
23 stroke adjusting bolt
24 actuator
25 driving rod of actuator
26 engagement portion of brake shoe
27 spring member for attachment
28 pin
29 cutout
30 plate
31 set screw
32 retaining split pin
33A, 34A first linear groove
33B, 34B second linear groove
33C, 34C third linear groove
35 center of brake pad

## Claims

1. An elevator device comprising: a hoisting machine (3) connected to a drive motor (8) via a rotating shaft (11), a main rope (4) being wound around the hoisting machine; a car (5) connected with one end of the main rope wound around the hoisting machine and a balance weight (6) connected with the other end of the main rope;
wherein the elevator device further comprises a disc brake system (15, 16, 36, 37) including a brake disc (14) connected with a rotating shaft of the hoisting machine, and a brake pad (21) that is configured to be pressed against the brake disc to apply braking force to stop the hoisting machine to bring the car and the balance weight into a stopped state, **characterised in that**
a sliding contact face of the brake pad that is configured to be in sliding contact with the brake disc has exactly three grooves, wherein the three grooves comprise one linear groove (33C, 34A) formed to extend through a center of the brake pad (35), and two linear grooves (33A, 33B, 34B, 34C) formed to be perpendicular to the one linear groove, wherein the two linear grooves are formed in parallel to each other avoiding the center of the brake pad with a distance therebetween, on opposite sides of the center of the brake pad, wherein intersections of the one linear groove with the two linear grooves are positioned off the center of the brake pad in the sliding contact face, and either the one linear groove or the two linear grooves is/are formed along a sliding contact direction of the brake pad and the brake disc.

2. The elevator device according to claim 1, wherein the disc brake system is positioned on a horizontal line through a center of the brake disc, and the brake pad of the disc brake system has two linear grooves, which are a first linear groove and a second linear groove formed to extend in the sliding contact direction of the brake pad and the brake disc, and one third linear groove formed to intersect with the first linear groove and the second linear groove in such a manner as to communicate with the first linear groove and the second linear groove, and extend in a direction perpendicular to the sliding contact direction and through the center of the brake pad, and intersections of the first linear groove and the second linear groove with the third linear groove are positioned off the center of the brake pad.

3. The elevator device according to claim 2, wherein the first linear groove and the second linear groove are formed to extend in a vertical direction.

4. The elevator device according to claim 2 or 3, wherein the brake pad is formed in a quadrangular shape.

5. The elevator device according to claim 1, wherein the disc brake system is positioned on a horizontal line through a center of the brake disc, and the brake pad of the disc brake system has one first linear groove formed to extend in the sliding contact direction of the brake pad and the brake disc and through the center of the brake pad, and a second linear groove and a third linear groove formed to intersect with the first linear groove in such a manner as to communicate with the first linear groove, and extend in a direction perpendicular to the sliding contact direction, and intersections of the first linear groove with the second linear groove and the third linear groove are positioned off the center of the brake pad.

6. The elevator device according to claim 5, wherein the first linear groove is formed to extend in a vertical direction.

7. The elevator device according to claim 5 or 6, wherein the brake pad is formed in a rectangular shape that is vertically long along the sliding contact direction.

8. The elevator device according to claim 1, wherein there are a plurality of the disc brake systems, the disc brake systems consisting of at least a disc brake system A being positioned on a horizontal line through a center of the brake disc and a disc brake system B installed above the disc brake system A, wherein
all of the brake pads of the disc brake system A and the disc brake system B have a configuration of the brake pad according to claim 2 or claim 5, or
the brake pads of the disc brake system A and the disc brake system B have a combination of configurations of the brake pads according to claim 2 and claim 5.

9. The elevator device according to claim 8, wherein the disc brake system A has the configuration of the brake pad according to claim 2 or claim 5, and the disc brake system B has the configuration of the brake pad according to claim 5 or claim 2.

10. The elevator device according to claim 9, wherein in the disc brake system A, the first linear groove and the second linear groove of the brake pad according to claim 2 are formed to extend in a vertical direction, or the first linear groove of the brake pad according to claim 5 is formed to extend in the vertical direction, and wherein in the disc brake system B, the first linear groove and the second linear groove of the brake pad according to claim 2 or the first linear groove of the brake pad according to claim 5 are formed to be tilted with respect to the vertical direction.

## Patentansprüche

1. Aufzugsvorrichtung, die Folgendes umfasst: eine Hebemaschine (3), die über eine rotierende Welle (11) mit einem Antriebsmotor (8) verbunden ist, ein Hauptseil (4), das um die Hebemaschine geschlungen ist; eine Kabine (5), die mit einem Ende des Hauptseils verbunden ist, das um die Hebemaschine geschlungen ist, und ein Ausgleichsgewicht (6), das mit dem anderen Ende des Hauptseils verbunden ist;
wobei die Aufzugsvorrichtung weiters ein Scheibenbremssystem (15, 16, 36, 37) umfasst, das eine Bremsscheibe (14), die mit einer rotierenden Welle der Hebemaschine verbunden ist, und einen Bremsbelag (21) umfasst, der ausgelegt ist, um gegen die Bremsscheibe gedrückt zu werden, um eine Bremskraft aufzubringen und die Hebemaschine anzuhalten, um die Kabine und das Ausgleichsgewicht in einen angehaltenen Zustand zu bringen,
**dadurch gekennzeichnet, dass** eine Gleitkontaktfläche des Bremsbelags, die ausgelegt ist, um in Gleitkontakt mit der Bremsscheibe zu sein, genau drei Rillen aufweist, wobei die drei Rillen eine lineare Rille (33C, 34A), die ausgebildet ist, um sich durch den Mittelpunkt des Bremsbelags (35) zu erstrecken, und zwei lineare Rillen (33A, 33B, 34B, 34C) umfasst, die orthogonal zu der einen linearen Rille ausgebildet sind, wobei die zwei linearen Rillen parallel zueinander ausgebildet sind und sich am Mittelpunkt des Bremsbelags, mit einem Abstand dazwischen, vorbei erstrecken, auf entgegengesetzten Seiten des Mittelpunkts des Bremsbelags, wobei Schnittpunkte der einen linearen Rille mit den zwei linearen Rillen außerhalb des Mittelpunkts des Bremsbelags in der Gleitkontaktfläche positioniert sind, und entweder die eine lineare Rille oder die zwei linearen Rillen entlang einer Gleitkontaktrichtung des Bremsbelags und der Bremsscheibe ausgebildet ist/sind.

2. Aufzugsvorrichtung nach Anspruch 1, wobei das Scheibenbremssystem auf einer horizontalen Linie durch den Mittelpunkt der Bremsscheibe positioniert ist und der Bremsbelag des Scheibenbremssystems zwei lineare Rillen aufweist, wobei es sich um eine erste lineare Rille und eine zweite lineare Rille, die ausgebildet sind, um sich in die Gleitkontaktrichtung der Bremsscheibe zu erstrecken, und eine dritte lineare Rille handelt, die ausgebildet ist, um die erste lineare Rille und die zweite lineare Rille derart zu schneiden, dass sie mit der ersten linearen Rille und der zweiten linearen Rille kommuniziert, und sich in eine Richtung orthogonal zur Gleitkontaktrichtung und durch den Mittelpunkt der Bremsscheibe erstreckt, und die Schnittpunkte der ersten linearen Rille und der zweiten linearen Rille mit der dritten linearen Rille außerhalb des Mittelpunkts der Bremsscheibe positioniert sind.

3. Aufzugsvorrichtung nach Anspruch 2, wobei die erste lineare Rille und die zweite lineare Rille ausgebildet sind, um sich in eine vertikale Richtung zu erstrecken.

4. Aufzugsvorrichtung nach Anspruch 2 oder 3, wobei der Bremsbelag in einer quadratischen Form ausgebildet ist.

5. Aufzugsvorrichtung nach Anspruch 1, wobei das Scheibenbremssystem auf einer horizontalen Linie durch den Mittelpunkt der Bremsscheibe positioniert ist und die Bremsscheibe des Scheibenbremssystems eine erste lineare Rille, die ausgebildet ist, um sich in die Gleitkontaktrichtung des Bremsbelags und der Bremsscheibe und durch den Mittelpunkt des Bremsbelags zu erstrecken, und eine zweite lineare Rille und eine dritte lineare Rille aufweist, die ausgebildet sind, um die erste linear Rille derart zu schneiden, dass sie mit der ersten linearen Rille kommunizieren, und sich in eine Richtung orthogonal zur Gleitkontaktrichtung zu erstrecken, und Schnittpunkte der ersten linearen Rille mit der zweiten linearen Rille und der dritten lineare Rille außerhalb des Mittelpunkts des Bremsbelags positioniert sind.

6. Aufzugsvorrichtung nach Anspruch 5, wobei die erste lineare Rille ausgebildet ist, um sich in eine vertikale Richtung zu erstrecken.

7. Aufzugsvorrichtung nach Anspruch 5 oder 6, wobei der Bremsbelag in einer rechteckigen Form ausgebildet ist, die entlang der Gleitkontaktrichtung vertikal lang ist.

8. Aufzugsvorrichtung nach Anspruch 1, wobei es eine Vielzahl der Scheibenbremssysteme gibt, wobei die Scheibenbremssysteme aus zumindest einem Scheibenbremssystem A, das auf einer horizontalen Linie durch den Mittelpunkt der Bremsscheibe positioniert ist, und einem Scheibenbremssystem B besteht, das über dem Scheibenbremssystem A eingebaut ist, wobei alle Bremsbeläge des Scheibenbremssystems A und des Scheibenbremssystems B die Konfiguration eines Bremsbelags nach Anspruch 2 oder Anspruch 5 aufweisen, oder
die Bremsbeläge des Scheibenbremssystems A und des Scheibenbremssystems B eine Kombination von Konfigurationen von Bremsbelägen nach Anspruch 2 und Anspruch 5 aufweisen.

9. Aufzugsvorrichtung nach Anspruch 8, wobei das Scheibenbremssystem A die Konfiguration eines Bremsbelags nach Anspruch 2 oder Anspruch 5 aufweist und das Scheibenbremssystem B die Konfiguration eines Bremsbelags nach Anspruch 5 oder Anspruch 2 aufweist.

10. Aufzugsvorrichtung nach Anspruch 9, wobei im Scheibenbremssystem A die erste lineare Rille und die zweite lineare Rille eines Bremsbelags nach Anspruch 2 ausgebildet sind, um sich in eine vertikale Richtung zu erstrecken, oder die erste lineare Rille eines Bremsbelags nach Anspruch 5 ausgebildet ist, um sich in die vertikale Richtung zu erstrecken, und wobei im Scheibenbremssystem B die erste lineare Rille und die zweite lineare Rille eines Bremsbelags nach Anspruch 2 oder die erste lineare Rille eines Bremsbelags nach Anspruch 5 ausgebildet sind, um in Bezug auf die vertikale Richtung geneigt zu sein.

## Revendications

1. Dispositif d'ascenseur comprenant : une machine de levage (3) reliée à un moteur d'entraînement (8) par l'intermédiaire d'un arbre rotatif (11), un câble principal (4) étant enroulé autour de la machine de levage ; une cabine (5) connectée à une extrémité du câble principal enroulé autour de la machine de levage, et un poids d'équilibrage (6) relié à l'autre extrémité du câble principal ;
dans lequel le dispositif d'ascenseur comprend en outre un système de frein à disque (15, 16, 36, 37) comprenant un disque de frein (14) relié à un arbre rotatif de la machine de levage, et une plaquette de frein (21) qui est configurée pour être pressée contre le disque de frein afin d'appliquer une force de freinage afin d'arrêter le machine de levage pour amener la cabine et le poids d'équilibrage dans un état stoppé, **caractérisé en ce que**
une face de contact coulissant de la plaquette de frein qui est configurée pour être en contact coulissant avec le disque de frein comporte exactement trois rainures, dans lequel les trois rainures comprennent une première rainure linéaire (33C, 34A) formée pour s'étendre à travers un centre de la plaquette de frein (35), et deux rainures linéaires (33A, 33B, 34B, 34C) formées pour être perpendiculaires à la première rainure linéaire, dans lequel les deux rainures linéaires sont formées parallèlement l'une à l'autre en évitant le centre de la plaquette de frein avec une distance entre celles-ci, sur des côtés opposés du centre de la plaquette de frein, dans lequel des intersections de la première rainure linéaire avec les deux rainures linéaires sont positionnées hors du centre de la plaquette de frein dans la face de contact coulissant, et soit la première rainure linéaire soit les deux rainures linéaires sont formées le long d'une direction de contact coulissant de la plaquette de frein et du disque de frein.

2. Dispositif d'ascenseur selon la revendication 1, dans lequel le système de frein à disque est positionné sur une ligne horizontale à travers un centre du disque de frein, et la plaquette de frein du système de frein à disque a deux rainures linéaires, qui sont une première rainure linéaire et une deuxième rainure linéaire formées pour s'étendre dans la direction de contact coulissant de la plaquette de frein et du disque de frein, et une troisième rainure linéaire formée pour recouper la première rainure linéaire et la deuxième rainure linéaire de manière à communiquer avec la première rainure linéaire et la deuxième rainure linéaire, et à s'étendre dans une direction perpendiculaire à la direction de contact coulissant et à travers le centre de la plaquette de frein, et des intersections de la première rainure linéaire et de la deuxième rainure linéaire avec la troisième rainure linéaire sont positionnées hors du centre de la plaquette de frein.

3. Dispositif d'ascenseur selon la revendication 2, dans lequel la première rainure linéaire et la deuxième rainure linéaire sont formées pour s'étendre dans une direction verticale.

4. Dispositif d'ascenseur selon la revendication 2 ou 3, dans lequel la plaquette de frein est formée en une forme quadrangulaire.

5. Dispositif d'ascenseur selon la revendication 1, dans lequel le système de frein à disque est positionné sur une ligne horizontale à travers un centre du disque de frein, et la plaquette de frein du système de frein à disque a une première rainure linéaire formée pour s'étendre dans la direction de contact coulissant de la plaquette de frein et du disque de frein, et à travers le centre de la plaquette de frein, et une deuxième rainure linéaire et une troisième rainure linéaire formées pour recouper la première rainure linéaire de manière à communiquer avec la première rainure linéaire, et s'étendre dans une direction perpendiculaire à la direction de contact coulissant, et des intersections de la première rainure linéaire avec la deuxième rainure linéaire et la troisième rainure linéaire sont positionnées hors du centre de la plaquette de frein.

6. Dispositif d'ascenseur selon la revendication 5, dans lequel la première rainure linéaire est formée pour s'étendre dans une direction verticale.

7. Dispositif d'ascenseur selon la revendication 5 ou 6, dans lequel la plaquette de frein est formée dans une forme rectangulaire qui est verticalement longue le long de la direction de contact coulissant.

8. Dispositif d'ascenseur selon la revendication 1, dans lequel il y a une pluralité de systèmes de frein à disque, les systèmes de frein à disque consistant en au moins un système de frein à disque A positionné sur une ligne horizontale à travers un centre du disque de frein et un système de frein à disque B installé au-dessus du système de frein à disque A, dans lequel
toutes les plaquettes de frein du système de frein à disque A et du système de frein à disque B ont une configuration de la plaquette de frein selon la revendication 2 ou la revendication 5, ou
les plaquettes de frein du système de frein à disque A et du système de frein à disque B ont une combinaison de configurations des plaquettes de frein selon la revendication 2 et la revendication 5.

9. Dispositif d'ascenseur selon la revendication 8, dans lequel le système de frein à disque A a la configuration de la plaquette de frein selon la revendication 2 ou la revendication 5, et le système de frein à disque B a la configuration de la plaquette de frein selon la revendication 5 ou la revendication 2.

10. Dispositif d'ascenseur selon la revendication 9, dans lequel dans le système de frein à disque A, la première rainure linéaire et la deuxième rainure linéaire de la plaquette de frein selon la revendication 2 sont formées pour s'étendre dans une direction verticale, ou la première rainure linéaire de la plaquette de frein selon la revendication 5 est formée pour s'étendre dans la direction verticale, et dans lequel dans le système de frein à disque B, la première rainure linéaire et la deuxième rainure linéaire de la plaquette de frein selon la revendication 2 ou la première rainure linéaire de la plaquette de frein selon la revendication 5 sont formées pour être inclinées par rapport à la direction verticale.
